# EUROPÄISCHE PATENTSCHRIFT

(11) **EP 3 433 789 B1**
(45) Veröffentlichungstag und Bekanntmachung des Hinweises auf die Patenterteilung: **18.12.2019**
(21) Anmeldenummer: 17705832.8
(22) Anmeldetag: 13.02.2017
(51) Int. Cl.: G06F 21/62, G06F 21/60, H04L 29/06, G07C 5/08, G06F 16/25

(54) **VERFAHREN ZUM VERWALTEN VON GESAMMELTEN FAHRZEUGDATEN**
METHOD FOR MANAGING COLLECTED VEHICLE DATA
PROCÉDÉ DE GESTION DE DONNÉES DE VÉHICULE COLLECTÉES

(30) Priorität: 24.03.2016 DE 102016205002
(43) Veröffentlichungstag der Anmeldung: 30.01.2019
(73) Patentinhaber: Volkswagen Aktiengesellschaft, 38440 Wolfsburg (DE)
(72) Erfinder: KÖHNKE, Axel, 48259 Dülmen (DE)
(86) Internationale Anmeldenummer: PCT/EP2017/053128
(87) Internationale Veröffentlichungsnummer: WO 2017/162366

(56) Entgegenhaltungen:
- US-A1- 2015 074 819
- US-A1- 2015 135 336
- US-B1- 6 711 495

## Beschreibung

Die vorliegende Erfindung betrifft die Kontrolle über und die Nachverfolgung von gesammelten Fahrzeugdaten. Insbesondere betrifft die vorliegende Erfindung ein Verfahren zum Verwalten von gesammelten Fahrzeugdaten eines Fahrzeugs in einer Datenbank.

Im Fahrzeug werden in zunehmendem Maße Daten erhoben, die sowohl benutzerspezifisch als auch benutzerunspezifisch sein können. Bei dem Fahrzeug kann es sich sowohl um ein Personen- als auch um ein Nutzfahrzeug handeln. Zum Beispiel kann ein Kraftfahrzeug ein Personenkraftwagen, ein Lastkraftwagen, ein Motorrad oder ein Traktor sein. Allgemein kann ein Kraftfahrzeug als eine Vorrichtung aufgefasst werden, die einen Motor, ein Antriebsstrangsystem sowie Räder umfasst. Gewöhnlich werden die erhobenen Daten außerhalb des Fahrzeugs in einem Back-End (z.B. eines Herstellers des Fahrzeugs), d.h. einem Server, einem Serververbund bzw. einer Cloud, gespeichert. Auf die dort gespeicherten Fahrzeugdaten kann zu Analysezwecken (z.B. Auswertung des Fahrverhaltens) oder zur Bereitstellung eines fahrzeugbezogenen Dienstes (z.B. Navigation) durch Anwendungen zugegriffen werden.

Bei einem Nutzer des Fahrzeugs kann das unkontrollierte Sammeln von Fahrzeugdaten mitunter zu einem Unbehagen führen, da er nicht in der Lage ist, nachzuverfolgen, wer auf die Fahrzeugdaten zugreift, bzw. zu kontrollieren, wie die Fahrzeugdaten zukünftig verwendet werden. Es ist daher angezeigt, dem Nutzer des Fahrzeugs die Kontrolle über die gesammelten Fahrzeugdaten zu ermöglichen bzw. Transparenz gegenüber dem Nutzer über die Datennutzung herzustellen.

In der Druckschrift US 2004/0128378 A1 ist ein Verfahren zur Bereitstellung von Benutzerdaten für Dritte durch einen zentralen Datenprovider gezeigt. Die Daten können auf über eine Internetseite des Datenproviders in ein Formular eingegeben werden, welches durch Klicken einer Reset-Schaltfläche wieder vollständig zurückgesetzt werden kann. Jedoch ist in der Druckschrift US 2004/0128378 A1 keine Lösung für das bedarfsgerechte Verwalten von gesammelten Fahrzeugdaten eines Fahrzeugs gezeigt.

Die Druckschrift US 2005/0229233 A1 zeigt ein Verfahren zur Bereitstellung zusätzlicher Informationen beim Abspielen eines Videos. Von einem Betrachter des Videos gemachte Einstellungen können dabei über einen Reset-Knopf auf Standardwerte zurückgesetzt werden. Jedoch ist auch in der Druckschrift US 2005/0229233 A1 keine Lösung für das bedarfsgerechte Verwalten von gesammelten Fahrzeugdaten eines Fahrzeugs gezeigt.

Druckschrift US 2015/0074819 A1 betrifft ein Verfahren zum Teilen von Artefakten in zugriffsbeschränkten Archiven. Ist ein Artefakt als suchbar gekennzeichnet, kann das Artefakt in einer Trefferliste einer Suche gelistet werden, wenn eine Relevanz des Artefakts für den verwendeten Suchbegriff über einem Schwellwert liegt. Jedoch ist auch in der Druckschrift US 2015/0074819 A1 keine Lösung für das bedarfsgerechte Verwalten von gesammelten Fahrzeugdaten eines Fahrzeugs gezeigt.

Es besteht somit ein Erfordernis, eine Möglichkeit bereitzustellen, um gesammelte Fahrzeugdaten eines Fahrzeugs bedarfsgerecht zu verwalten.

Die vorliegende Erfindung ist durch den unabhängigen Anspruch 1 definiert.

Die vorliegende Erfindung ermöglicht dies durch ein Verfahren zum Verwalten von gesammelten Fahrzeugdaten eines Fahrzeugs in einer Datenbank. Die Datenbank kann beispielsweise durch einen Server, einen Serververbund bzw. eine Daten-Cloud gebildet sein. Die in der Datenbank gesammelten Fahrzeugdaten können u.a. im Fahrzeug gemessene Rohdaten, als auch prozessierte Daten (z.B. ausgewertete Daten) umfassen. Die Fahrzeugdaten können benutzerspezifisch sein, d.h. sie können einem konkreten Benutzer des Fahrzeugs zugeordnet sein. Alternativ können die Fahrzeugdaten auch benutzerunspezifisch sein, d.h. sie sind zwar einem konkreten Fahrzeug, nicht jedoch einem konkreten Benutzer des Fahrzeugs zugeordnet. Die Fahrzeugdaten können beispielsweise letzte Fahrtziele des Fahrzeugs, Einstellungen des Fahrzeugs (z.B. Sitz-, Lenkrad- oder Spiegelposition), Nutzungen des Fahrzeugs (z. B. Datum, Uhrzeit, zurückgelegte Strecke), Telemetriedaten (z. B. Motordrehzahlen, Geschwindigkeitsverläufe) oder genutzte Anwendungen eines Infotainmentsystems des Fahrzeugs umfassen.

Die Fahrzeugdaten sind dabei in der Datenbank zusammen mit Informationen über eine zulässige (erlaubte) Verwendung der Fahrzeugdaten gespeichert. Mit anderen Worten: Zusammen mit den Fahrzeugdaten sind Regeln über die zulässige Verwendung der Fahrzeugdaten in der Datenbank gespeichert. Die Datenbank erlaubt einen Zugriff auf die Fahrzeugdaten nur gemäß den Informationen über die zulässige Verwendung. Somit kann sichergestellt werden, dass ein Zugriff auf die Fahrzeugdaten nur gemäß den Informationen über die zulässige Verwendung der Fahrzeugdaten geschieht. In der Datenbank können neben den vorgenannten Informationen über die zulässige Verwendung auch weitere Informationen zusammen mit den Fahrzeugdaten gespeichert sein. Beispielsweise können bei benutzerspezifischen Fahrzeugdaten Informationen über ein Benutzerprofil des Fahrzeugnutzers gespeichert sein.

Das Verfahren umfasst dabei ein Empfangen von Informationen über eine gewünschte Verwendungsweise der Fahrzeugdaten. Die Informationen über die gewünschte Verwendungsweise der Fahrzeugdaten können beispielsweise in Folge einer Benutzereingabe empfangen werden. Die Benutzereingabe kann z.B. im Fahrzeug durch Drücken eines Bedienelements oder einer Eingabe im Infotainmentsystem des Fahrzeugs erfolgen. Auch kann die Benutzereingabe z.B. über eine Anwendung bzw. Applikation auf einem mobilen Kommunikationsgerät (z.B. Smartphone, Tablet-Computer oder Laptop) oder einem Computer erfolgen. Weiterhin kann die Benutzereingabe auch in Form eines Sprachbefehls für ein Infotainmentsystem des Fahrzeugs oder ein mobiles Kommunikationsgerät erfolgen. Alternativ können die Informationen über die gewünschte Verwendungsweise der Fahrzeugdaten automatisch in Folge eines Eintritts einer vorbestimmten Bedingung ausgegeben werden. Die Informationen über die gewünschte Verwendungsweise können z.B. automatisch nach Aufkündigung eines Vertragsverhältnisses mit einem Betreiber der Datenbank (z.B. dem Hersteller des Fahrzeugs); zu einem vorbestimmten Zeitpunkt; einer Anmeldung mit einem neuen Benutzerprofil im Fahrzeug, das von einem bisher verwendeten Benutzerprofil verschieden ist; oder einem Fahrtende ausgegeben werden. Die Informationen über die gewünschte Verwendungsweise der Fahrzeugdaten zeigen die (von einem Benutzer) gewünschte weitere Verwendungsweise der gesammelten Fahrzeugdaten an.

Weiterhin umfasst das Verfahren ein Aktualisieren der Informationen über die zulässige Verwendung der Fahrzeugdaten gemäß den (empfangenen) Informationen über die gewünschte Verwendungsweise der Fahrzeugdaten. Beim Aktualisieren der Informationen über die zulässige Verwendung der Fahrzeugdaten können die bisherigen Informationen über die zulässige Verwendung der Fahrzeugdaten z.B. überschrieben werden. Alternativ kann z.B. einer Zugriffskontrolleinheit der Datenbank (z.B. einem Datenbankmanagementsystem das die Datenbank verwaltet) mitgeteilt werden, dass nunmehr die empfangenen Informationen über die gewünschte Verwendungsweise der Fahrzeugdaten als die Informationen über die zulässige Verwendung der Fahrzeugdaten gelten. Durch die Aktualisierung der in der Datenbank gespeicherten Informationen über die zulässige Verwendung der Fahrzeugdaten kann sichergestellt werden, dass die Datenbank zukünftig nur mehr einen Zugriff auf die gespeicherten Fahrzeugdaten gemäß der gewünschten Verwendungsweise der Fahrzeugdaten gestattet. Ein Benutzer kann somit durch die Angabe einer gewünschten Verwendungsweise über die zukünftige Verwendungsweise der gesammelten Fahrzeugdaten entscheiden. Mit anderen Worten: Dem Benutzer kann die Kontrolle über die Fahrzeugdaten ermöglicht werden.

Dabei zeigen die Informationen über die gewünschte Verwendungsweise der Fahrzeugdaten ein Verbot der weiteren Verwendung der Fahrzeugdaten an. Entsprechend werden die in der Datenbank gespeicherten Informationen über die zulässige Verwendung der Fahrzeugdaten dahingehend aktualisiert, dass eine weitere Verwendung der Fahrzeugdaten nicht zulässig ist. Somit kann sichergestellt werden, dass auf die in der Datenbank gespeicherten Fahrzeugdaten nicht mehr zugegriffen werden kann. Weiterhin umfasst das Verfahren ein Löschen der Fahrzeugdaten aus der Datenbank. Durch das Löschen der Fahrzeugdaten aus der Datenbank kann sichergestellt werden, dass kein physischer Zugriff auf die Fahrzeugdaten mehr möglich ist. Einem Benutzer kann somit eine große Sicherheit hinsichtlich des Ausbleibens einer weiteren Nutzung der Fahrzeugdaten ermöglicht werden.

Die Fahrzeugdaten sind in der Datenbank zusammen mit Informationen über Zugriffe von Anwendungen auf die Fahrzeugdaten gespeichert. Mit anderen Worten: In der Datenbank ist ein Protokoll betreffend die Zugriffe auf die Fahrzeugdaten gespeichert. Informationen über Zugriffe von Anwendungen auf die Fahrzeugdaten können z.B. einen Namen der Anwendung, eine Netzwerkadresse einer Vorrichtung, auf der die Anwendung ausgeführt wird, eine Zeit des Zugriffs auf die Fahrzeugdaten oder auch einen Betreiber der Anwendung bzw. der Vorrichtung, auf der die Anwendung ausgeführt wird, umfassen. Somit kann eine breite Palette an Informationen über die Verwendung bzw. Nutzung der Fahrzeugdaten bereitgehalten werden. Das Verfahren umfasst ferner ein Senden einer Aufforderung zur Löschung lokaler Kopien der Fahrzeugdaten an eine Anwendung, die gemäß den Informationen über Zugriffe von Anwendungen auf die Fahrzeugdaten auf die Fahrzeugdaten zugegriffen hat. Mit anderen Worten: die physische Löschung der Fahrzeugdaten soll nicht lediglich innerhalb der Datenbank erfolgen, sondern auch (externe) lokale Kopien, die durch die zugreifende Anwendung erzeugt wurde, umfassen. Falls eine lokale Kopie der Fahrzeugdaten durch die Anwendung erzeugt wurde, kann das Verfahren ein Löschen der lokalen Kopie der Fahrzeugdaten durch die Anwendung umfassen. Die Anwendung erhält somit eine Löschungsanforderung und sorgt für eine Löschung lokaler Kopien der Fahrzeugdaten. Das Löschen der lokalen Kopie der Fahrzeugdaten durch die Anwendung kann dabei unmittelbar durch die Anwendung selbst geschehen. Jedoch kann die Anwendung z.B. auch eine weitere (Hilfs-)Anwendung mit der Löschung der lokalen Kopie beauftragen. Durch das Senden der Löschungsaufforderung an die auf die Fahrzeugdaten zugreifende Anwendung und das Löschen der lokalen Kopie der Fahrzeugdaten kann sichergestellt werden, dass nicht nur eine weitere Verwendungen der in der Datenbank gespeicherten Fahrzeugdaten unterbleibt, sondern auch eine weitere Verwendung der Fahrzeugdaten in Form der lokalen Kopie unterbleibt. Ein Unterlaufen des gewünschten Verbots der weiteren Verwendung bzw. Nutzung der Fahrzeugdaten durch Erzeugung lokaler Kopien (außerhalb der Datenbank) kann somit verhindert werden.

Gemäß einigen Ausführungsformen der vorliegenden Erfindung wird die Aufforderung zur Löschung lokaler Kopien der Fahrzeugdaten an alle Anwendungen gesendet, die auf die Fahrzeugdaten zugegriffen haben gemäß den Informationen über Zugriffe von Anwendungen auf die Fahrzeugdaten. Somit kann sichergestellt werden, dass alle von den Anwendungen erzeugten lokalen Kopien der Fahrzeugdaten - wie vorgehend beschrieben - gelöscht werden. Ein Unterlaufen des gewünschten Verbots der weiteren Verwendung bzw. Nutzung der Fahrzeugdaten durch Erzeugung lokaler Kopien (außerhalb der Datenbank) kann somit verhindert werden.

In einigen Ausführungsbeispielen der vorliegenden Erfindung wird die Aufforderung zur Löschung lokaler Kopien der Fahrzeugdaten in Folge eines Eintritts einer vorbestimmten Bedingung gesendet. Damit kann erreicht werden, dass mit Eintritt einer vorbestimmten Bedingung automatisch die Löschungsaufforderung an weitere Anwendungen gesendet wird.

Die Bedingung kann z.B. die Aufkündigung eines Vertragsverhältnisses mit einem Betreiber der Datenbank (z.B. dem Hersteller des Fahrzeugs) oder die Anmeldung im Fahrzeug mit einem Benutzerprofil, das von einem bisher verwendeten oder einem mit dem Fahrzeug gekoppelten Benutzerprofil verschieden ist (z.B. nach einem Verkauf des Fahrzeugs), sein. Bei den beiden vorgenannten exemplarischen Bedingungen kann davon ausgegangen werden, dass ein Benutzer des Fahrzeugs kein Interesse an einer weiteren Verwendung seiner bisher gesammelten Fahrzeugdaten durch den Betreiber der Datenbank oder einen sonstigen Dritten bzw. einer Verwendung seiner Fahrzeugdaten zu Gunsten des anderen Benutzers des Fahrzeugs hat. Vielmehr ist davon auszugehen, dass der (bisherige) Benutzer des Fahrzeugs explizit keine weitere Nutzung seiner Fahrzeugdaten wünscht. Durch das automatische Aussenden der Löschungsaufforderung kann sichergestellt werden, dass dieser Wunsch des (bisherigen) Benutzers des Fahrzeugs sich nicht nur in der Löschung der Fahrzeugdaten aus der Datenbank niederschlägt, sondern auch (alle) lokale Kopien einer weiteren Nutzung durch Anwendungen entzogen sind. Da die Aussendung der Löschungsaufforderung automatisch geschieht, muss der Benutzer nicht selbst eingreifen, so dass weiterhin ein Komfort für den Benutzer erhöht sein kann.

Gemäß einigen Ausführungsformen der vorliegenden Erfindung umfasst die Aufforderung zur Löschung lokaler Kopien der Fahrzeugdaten ferner eine Aufforderung an die Anwendung, die Aufforderung zur Löschung lokaler Kopien der Fahrzeugdaten an weitere Anwendungen weiterzuleiten, die auf die lokale Kopie zugegriffen haben. Somit kann die Aufforderung zur Löschung lokaler Kopien repetitiv an alle Anwendungen weitergeleitet werden, die Zugriff auf die Fahrzeugdaten hatten (entweder direkt oder auf lokale Kopien davon). Die Löschungsaufforderung kann somit an alle Anwendungen weitergeleitet werden, die möglicherweise lokale Kopien von den Fahrzeugdaten erzeugt haben. Somit kann das gewünschte Verbot der weiteren Verwendungen der Fahrzeugdaten auch bei diesen weiteren Anwendungen durchgesetzt werden.

In einigen Ausführungsbeispielen der vorliegenden Erfindung umfasst das Verfahren daher ferner ein Bestimmen einer weiteren Anwendung, die auf die lokale Kopie der Fahrzeugdaten zugegriffen hat, durch die Anwendung sowie ein Weiterleiten der Aufforderung zur Löschung lokaler Kopien der Fahrzeugdaten an die weitere Anwendung. Mit anderen Worten: Die Löschungsaufforderung wird an eine Anwendung weitergeleitet, die möglicherweise lokale Kopien von den Fahrzeugdaten erzeugt hat. Falls eine weitere lokale Kopie der Fahrzeugdaten durch die weitere Anwendung erzeugt wurde, umfasst das Verfahren daher ferner ein Löschen der weiteren lokalen Kopie der Fahrzeugdaten durch die weitere Anwendung. Damit wird das gewünschte Verbot der weiteren Verwendungen der Fahrzeugdaten auch bei der weiteren Anwendung durchgesetzt.

Gemäß einigen Ausführungsformen der vorliegenden Erfindung umfasst das Verfahren ferner ein Ausgeben einer Benachrichtigung an einen Benutzer des Fahrzeugs, dass die Fahrzeugdaten gelöscht wurden. Einem Benutzer kann somit aktiv mitgeteilt werden, dass seinem Verbot der weiteren Verwendung bzw. Nutzung der Fahrzeugdaten entsprochen wurde. Die Benachrichtigung kann an den Benutzer z.B. in Textform oder als Sprachausgabe über das Infotainmentsystem des Fahrzeugs oder über eine Anwendung auf einem mobilen Kommunikationsgerät ausgegeben werden. Wurden neben den Fahrzeugdaten aus der Datenbank auch lokale Kopien der Fahrzeugdaten gelöscht, kann die Benachrichtigung optional weitergehende Informationen bezüglich der gelöschten lokalen Kopien umfassen. So kann die Benachrichtigung beispielsweise einen Namen der die lokale Kopie erzeugenden (bzw. verwaltenden) Anwendung, eine Netzwerkadresse einer Vorrichtung, auf der die Anwendung ausgeführt wird, oder auch einen Betreiber der Anwendung bzw. der Vorrichtung, auf der die Anwendung ausgeführt wird, umfassen. Der Benutzer des Fahrzeugs kann somit umfassend über die Verbreitung der Fahrzeugdaten informiert werden. Somit ist eine hohe Transparenz hinsichtlich der Datennutzung gegenüber dem Benutzer möglich.

Wie oben bereits angedeutet, basieren die Informationen über die gewünschte Verwendungsweise der Fahrzeugdaten gemäß einigen Ausführungsformen der vorliegenden Erfindung auf einer Benutzereingabe eines Benutzers des Fahrzeugs. Der Benutzer kann somit aktiv über die zulässige Verwendung der gesammelten Fahrzeugdaten entscheiden. Dem Benutzer steht somit eine vollständige Kontrolle über die gesammelten Fahrzeugdaten offen.

Die oben beschriebene Funktionalität kann dabei auf einer neuen zusätzlichen Hardwarekomponente der Datenbank, wie eine CPU (Central Processing Unit) oder dergleichen, ablaufen. Es versteht sich von selbst, dass gemäß einigen Ausführungsbeispielen der vorliegenden Erfindung die Funktionalität nicht durch ein zusätzliches Hardware-Bauteil in Form eines weiteren Prozessors oder dergleichen implementiert werden muss. Gemäß einiger Ausführungsbeispiele ist es auch möglich, die Funktionalität durch ein einfaches Software-Update für eine bereits existierende CPU bzw. eine bereits existierende programmierbare Hardwarekomponente zu implementieren. Beispielsweise kann ein bereits bestehendes Datenbankmanagementsystem upgedatet werden, um die oben beschriebene Funktionalität bereitzustellen. Daher umfassen Ausführungsbeispiele der vorliegenden Erfindung auch ein Programm mit einem Programmcode zum Durchführen des oben beschriebenen Verfahrens, wenn der Programmcode auf einem Computer, einem Prozessor oder einer programmierbaren Hardwarekomponente abläuft bzw. dort ausgeführt wird.

Ausführungsbeispiele der vorliegenden Erfindung werden nachfolgend, Bezug nehmend auf die beigefügten Figuren, näher erläutert. Es zeigen:
Fig. 1 zeigt ein Flussdiagram eines Ausführungsbeispiels eines Verfahrens zum Verwalten von gesammelten Fahrzeugdaten eines Fahrzeugs in einer Datenbank;
Fig. 2 zeigt schematisch ein Beispiel eines Systems zur Sammlung und Nutzung von Fahrzeugdaten; und
Fig. 3 zeigt schematisch ein Ablaufdiagram eines Ausführungsbeispiels einer Löschung von Fahrzeugdaten.

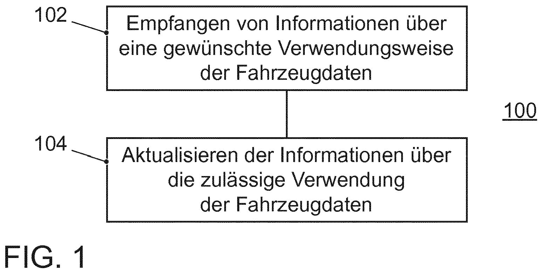

In der Fig. 1 ist ein Verfahren 100 zum Verwalten von gesammelten Fahrzeugdaten eines Fahrzeugs in einer Datenbank (z.B. Server, Serververbund bzw. Daten-Cloud) gezeigt.

Die Fahrzeugdaten sind dabei in der Datenbank zusammen mit Informationen über eine zulässige (erlaubte) Verwendung der Fahrzeugdaten gespeichert. Die Datenbank erlaubt einen Zugriff auf die Fahrzeugdaten nur gemäß den Informationen über die zulässige Verwendung. Somit kann sichergestellt werden, dass ein Zugriff auf die Fahrzeugdaten nur gemäß den Informationen über die zulässige Verwendung der Fahrzeugdaten geschieht.

Das Verfahren 100 umfasst dabei ein Empfangen 102 von Informationen über eine gewünschte Verwendungsweise der Fahrzeugdaten. Die Informationen über die gewünschte Verwendungsweise der Fahrzeugdaten können beispielsweise in Folge einer Benutzereingabe empfangen werden. Alternativ können die Informationen über die gewünschte Verwendungsweise der Fahrzeugdaten automatisch in Folge eines Eintritts einer vorbestimmten Bedingung ausgegeben werden. Die Informationen über die gewünschte Verwendungsweise der Fahrzeugdaten zeigen die (von einem Benutzer) gewünschte weitere Verwendungsweise der gesammelten Fahrzeugdaten an. Die gewünschte Verwendungsweise kann dabei vielfältig sein. Sie kann beispielsweise von einem Verbot der weiteren Verwendung der Fahrzeugdaten über eine eingeschränkte Verwendung bis zu einer kompletten Datenfreigabe reichen. Auch kann die gewünschte Verwendungsweise z.B. eine gewünschte Protokollierung der Verwendung der Fahrzeugdaten umfassen.

Weiterhin umfasst das Verfahren 100 ein Aktualisieren 104 der Informationen über die zulässige Verwendung der Fahrzeugdaten gemäß den (empfangenen) Informationen über die gewünschte Verwendungsweise der Fahrzeugdaten. Beim Aktualisieren der Informationen über die zulässige Verwendung der Fahrzeugdaten können die bisherigen Informationen über die zulässige Verwendung der Fahrzeugdaten z.B. überschrieben werden. Alternativ kann z.B. einer Zugriffskontrolleinheit der Datenbank (z.B. einem Datenbankmanagementsystem das die Datenbank verwaltet) mitgeteilt werden, dass nunmehr die empfangenen Informationen über die gewünschte Verwendungsweise der Fahrzeugdaten als die Informationen über die zulässige Verwendung der Fahrzeugdaten gelten.

Durch die Aktualisierung der in der Datenbank gespeicherten Informationen über die zulässige Verwendung der Fahrzeugdaten kann sichergestellt werden, dass die Datenbank zukünftig nur mehr einen Zugriff auf die gespeicherten Fahrzeugdaten gemäß der gewünschten Verwendungsweise der Fahrzeugdaten gestattet. Ein Benutzer kann somit durch die Angabe einer gewünschten Verwendungsweise über die zukünftige Verwendungsweise der gesammelten Fahrzeugdaten entscheiden. Mit anderen Worten: Dem Benutzer kann die Kontrolle über die Fahrzeugdaten ermöglicht werden.

Weitere Details und Aspekte des Verfahrens sind vorangehend in Zusammenhang mit einem oder mehreren Ausführungsbeispielen beschrieben. Das Verfahren kann eines oder mehrere optionale Merkmale gemäß einem oder mehreren der vorbeschriebenen Ausführungsbeispiele umfassen.

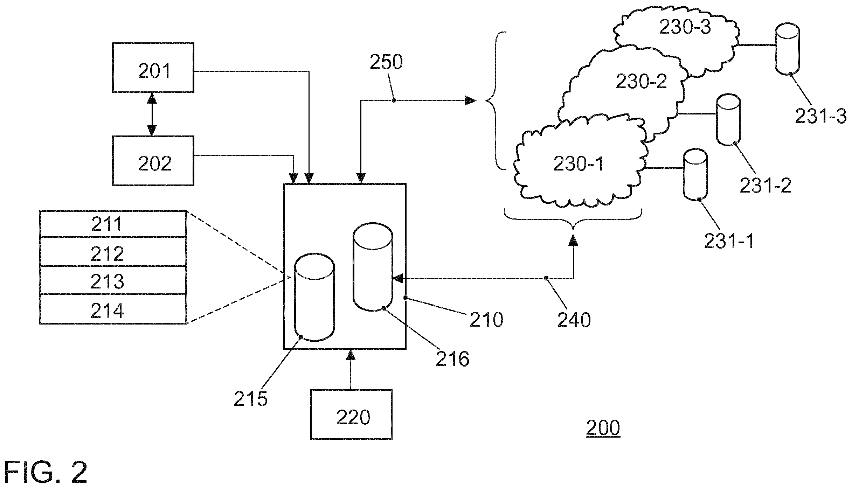

In Fig. 2 ist eine Übersicht über ein beispielhaftes System 200, das Fahrzeugdaten 211 sammelt und weiterverarbeitet, gezeigt. Die Fahrzeugdaten 211 werden aus einem Fahrzeug 201 gesammelt und in einer Datenbank 210 gespeichert. Ist das Fahrzeug 201 über ein Benutzerprofil 202 personalisiert, können die Fahrzeugdaten 211 in der Datenbank personalisiert gespeichert sein. Dazu können neben den Fahrzeugdaten 211 Benutzerinformationen 213, die zu dem Benutzerprofil 202 korrespondieren, gespeichert sein.

Wie in der Fig. 2 gezeigt, kann die Datenbank 210 einen ersten Server 215 und einen zweiten Server 216 umfassen, die sowohl in räumlicher Nähe zueinander (z.B. in einem gemeinsamen Serverpark) als auch voneinander entfernt (z.B. in verschiedenen Serverparks) angeordnet sein können. Datenbank 210 kann ganz allgemeinen aus einem oder mehreren Servern aufgebaut sein, um eine Daten-Cloud bereitzustellen.

Die Fahrzeugdaten 211 (und optional die Benutzerinformationen 213) sind in der Datenbank 210 zusammen mit Informationen 212 über eine zulässige Verwendung der Fahrzeugdaten gespeichert. Die Daten (als auch lediglich Teile davon) können in der Datenbank 210 sowohl unverschlüsselt als auch verschlüsselt vorliegen. Im Hinblick auf die Datensicherheit kann jedoch die Verschlüsselung der Daten vorteilhaft sein. Ebenso kann auch bereits die Übertragung der Fahrzeugdaten 211 vom Fahrzeug 201 zur Datenbank 210 verschlüsselt erfolgen. Die Datenbank 210 erlaubt einen Zugriff auf die Fahrzeugdaten 211 nur gemäß den Informationen 212 über die zulässige Verwendung.

Die Datenbank 210 (z.B. ein internes Datenbankmanagementsystem) ist dabei ausgebildet, Informationen 220 über eine gewünschte Verwendungsweise der Fahrzeugdaten zu empfangen und die Informationen 212 über die zulässige Verwendung der Fahrzeugdaten gemäß den empfangenen Informationen 220 über die gewünschte Verwendungsweise der Fahrzeugdaten zu aktualisieren. Alternativ kann die vorbeschriebene Funktionalität auch von einem externen Steuermodul (nicht gezeigt) übernommen werden, das die Datenbank 210 steuert und kontrolliert. Das Steuermodul kann dabei sowohl als Hardwarekomponente als auch als Softwarekomponente ausgebildet sein.

Der Zugriff von Anwendungen 230-1, 230-2, 230-3 auf die Fahrzeugdaten 211 ist durch die Datenbank 210 gemäß den Informationen 212 über die zulässige Verwendung der Fahrzeugdaten beschränkt. Ist z.B. durch die Informationen 212 über die zulässige Verwendung der Fahrzeugdaten ein Verbot der weiteren Verwendung der Fahrzeugdaten 211 angezeigt, erlaubt die Datenbank 210 den Anwendungen 230-1, 230-2, 230-3 keinen Zugriff auf die Fahrzeugdaten 211 (und optional auch auf die Benutzerinformationen 213) über die Verbindung 240 mehr. Ist beispielsweise durch die Informationen 212 über die zulässige Verwendung der Fahrzeugdaten eine exklusive Zugriffserlaubnis auf die Fahrzeugdaten 211 für die erste Anwendung 230-1 angezeigt, erlaubt die Datenbank 210 der ersten Anwendung 230-1 den Zugriff auf die Fahrzeugdaten 211 über die Verbindung 240, aber der zweiten Anwendung 230-2 und der dritten Anwendung 230-3 nicht.

Weiterhin können die Informationen 212 über die zulässige Verwendung der Fahrzeugdaten ein Protokollieren eines Zugriffs einer Anwendung auf die Fahrzeugdaten umfassen. Dann werden Zugriffe einer der Anwendungen 230-1, 230-2, 230-3 auf die Fahrzeugdaten 211 durch die Datenbank 211 protokolliert. Das heißt, es werden zusätzlich Informationen 214 über Zugriffe von Anwendungen auf die Fahrzeugdaten in der Datenbank 210 gespeichert. Weiterhin kann über eine Anfrageverbindung 250 aktiv an eine der Anwendungen 230-1, 230-2, 230-3 eine Anfrage gesendet werden, ob die Anwendung einer weiteren Anwendung Zugriff auf die Fahrzeugdaten 211 ermöglicht hat. Hat nun z.B. die erste Anwendung 230-1 der zweiten Anwendung 230-2 Zugriff auf die Fahrzeugdaten 211 ermöglicht (z.B. durch Weiterleitung der Fahrzeugdaten oder durch Gestatten eines Zugriffs auf eine lokale Kopie der Fahrzeugdaten der ersten Anwendung 230-1), teilt die erste Anwendung 230-1 dies über die Anfrageverbindung 250 mit, so dass der Zugriff der zweiten Anwendung 230-2 auf die Fahrzeugdaten 211 protokolliert werden kann. Somit kann umfassend nachverfolgt werden, wie die Fahrzeugdaten 211 verwendet wurden.

Die Informationen 212 über die zulässige Verwendung der Fahrzeugdaten können beispielsweise auch ein Verbot der weiteren Verwendung der Fahrzeugdaten 211 anzeigen. Entsprechend werden die Fahrzeugdaten 211 aus der Datenbank 210 gelöscht, um sicherzustellen, dass kein physischer Zugriff auf die Fahrzeugdaten 211 mehr möglich ist. Wie oben bereits angedeutet, können die Anwendungen 230-1, 230-2, 230-3 auch lokale Kopien der Fahrzeugdaten 211 erzeugen. Beispielsweise können die Anwendungen 230-1, 230-2, 230-3 in jeweiligen Speichern 231-1, 231-2, 231-3 lokale Kopien der Fahrzeugdaten 211 speichern. Um auch die weitere Verwendungen dieser lokaler Kopien der Fahrzeugdaten 211 auszuschließen, werden Aufforderungen zur Löschung lokaler Kopien der Fahrzeugdaten 211 an die Anwendungen 230-1, 230-2, 230-3 gesendet, falls diese gemäß den Informationen 214 über Zugriffe von Anwendungen auf die Fahrzeugdaten auf die Fahrzeugdaten 211 zugegriffen haben. Falls eine lokale Kopie der Fahrzeugdaten 211 durch eine der Anwendungen 230-1, 230-2, 230-3 erzeugt wurde, wird die lokale Kopie der Fahrzeugdaten 211 durch die Anwendung 230-1, 230-2 oder 230-3 aus ihrem jeweiligen Speicher 231-1, 231-2, 231-3 gelöscht.

Hat nur eine der Anwendungen 230-1, 230-2, 230-3, z.B. die erste Anwendung 230-1, direkt auf die Fahrzeugdaten 211 in der Datenbank 210 zugegriffen und eine lokale Kopie der Fahrzeugdaten 211 in ihrem Speicher 231-1 erzeugt, jedoch einer weiteren Anwendung, z.B. der zweiten Anwendung 230-2, Zugriff auf diese lokale Kopie erlaubt, kann durch die Aufforderung zur Löschung auch sichergestellt werden, dass auch die zweite Anwendung 230-2 die Fahrzeugdaten 211 nicht weiter verwenden kann. Dazu umfasst Aufforderung zur Löschung lokaler Kopien der Fahrzeugdaten eine Aufforderung an die erste Anwendung 230-1, die Aufforderung zur Löschung lokaler Kopien der Fahrzeugdaten an Anwendungen weiterzuleiten, die auf ihre lokale Kopie der Fahrzeugdaten 211 zugegriffen haben. Entsprechend prüft die erste Anwendung 230-1, ob sie einer weiteren Anwendung Zugriff auf ihre lokale Kopie gestattet hat. Im vorliegenden Beispiel würde die erste Anwendung bestimmen, dass die zweite Anwendung 230-2 auf ihre lokale Kopie der Fahrzeugdaten 211 zugegriffen hat. Die erste Anwendung 230-1 leitet die Aufforderung zur Löschung lokaler Kopien der Fahrzeugdaten 211 dann an die zweite Anwendung 230-2 weiter. Falls die zweite Anwendung 230-2 eine weitere lokale Kopie der Fahrzeugdaten 211 in ihrem Speicher 231-2 gespeichert hat, löscht sie diese. Das Weiterleiten der Aufforderung zur Löschung lokaler Kopien der Fahrzeugdaten wird repetitiv ausgeführt, so dass sie an alle Anwendungen, die nachweisbar auf die Fahrzeugdaten 211 zugegriffen haben, die Löschungsaufforderung gesendet wird und alle lokalen Kopien der Fahrzeugdaten 211 gelöscht werden können.

Auf diese Weise kann eine unerwünschte Weiterverwendung der Fahrzeugdaten 211 unterbunden werden. Eine Bestätigung der Löschung der Fahrzeugdaten 211 kann über eine Benachrichtigung z.B. an einen Benutzer des Fahrzeugs ausgegeben werden.

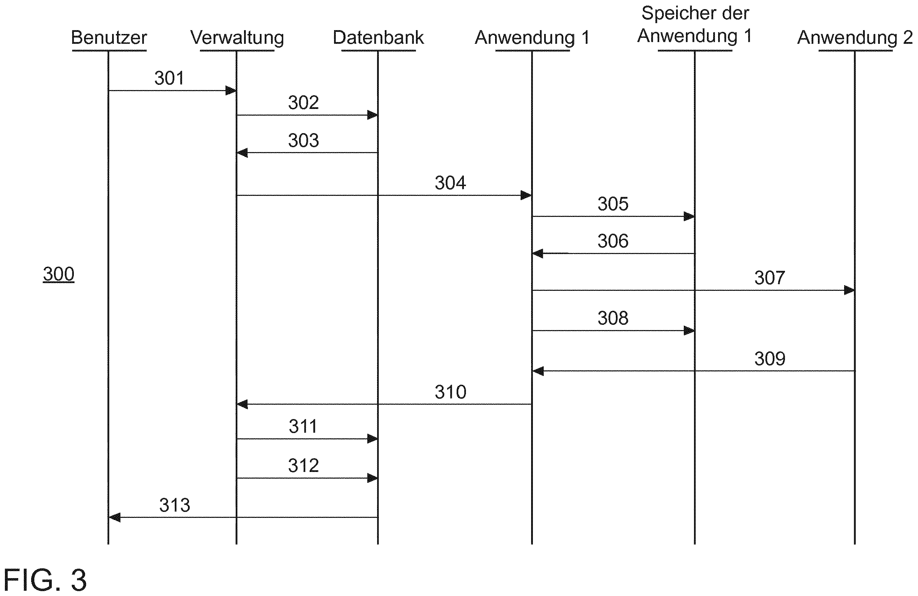

Zur Verdeutlichung des erfindungsgemäßen Löschprozesses zeigt Fig. 3 schematisch ein Ablaufdiagram 300 eines Ausführungsbeispiels einer Löschung von Fahrzeugdaten.

Ein Benutzer macht eine Benutzereingabe 301 (z.B. im Fahrzeug oder einer Anwendung auf einem Mobilkommunikationsgerät oder Computer), welche von einem Verwaltungsmodul der Datenbank empfangen wird. Die Benutzereingabe spezifiziert, dass eine weitere Verwendung der Fahrzeugdaten nicht gewünscht ist. Entsprechend werden die Informationen über die zulässige Verwendung der Fahrzeugdaten in der Datenbank aktualisiert 302. Weiterhin werden von der Datenbank Informationen über Zugriffe von Anwendungen auf die Fahrzeugdaten an das Verwaltungsmodul übermittelt 303. Das Verwaltungsmodul wertet die Informationen über Zugriffe von Anwendungen auf die Fahrzeugdaten aus und sendet 304 eine Aufforderung zur Löschung lokaler Kopien der Fahrzeugdaten an eine Anwendung 1, die in den Informationen über Zugriffe von Anwendungen auf die Fahrzeugdaten aufgeführt ist.

Die Anwendung 1 hat eine lokale Kopie der Fahrzeugdaten in ihrem Speicher gespeichert. Die Anwendung 1 aktualisiert 305 zunächst ihre Informationen über die zulässige Verwendung der Fahrzeugdaten und empfängt 306 aus ihrem Speicher Informationen über Zugriffe von Anwendungen auf ihre lokale Kopie der Fahrzeugdaten. Die Anwendung 1 wertet die Informationen über Zugriffe von Anwendungen auf die lokale Kopie der Fahrzeugdaten aus und sendet 307 eine Aufforderung zur Löschung lokaler Kopien der Fahrzeugdaten an eine Anwendung 2, die in den Informationen über Zugriffe von Anwendungen auf die lokale Kopie der Fahrzeugdaten aufgeführt ist. Ferner löscht 308 die Anwendung 1 die lokale Kopie der Fahrzeugdaten. Wurde von der Anwendung 2 eine weitere lokale Kopie der Fahrzeugdaten erstellt, wird diese durch die Anwendung 2 gelöscht und eine Bestätigung über die Löschung der Fahrzeugdaten an die Anwendung 1 gesendet 309.

Die Anwendung 1 sendet 310 wiederum eine Bestätigung an das Verwaltungsmodul, in dem sie bestätigt, dass sie und die Anwendung 2 ihre lokalen Kopien der Fahrzeugdaten gelöscht haben. Das Verwaltungsmodul wiederum veranlasst 311 eine Löschung der Fahrzeugdaten aus der Datenbank. Die Löschungen der Fahrzeugdaten werden in der Datenbank protokolliert 312 und an den Benutzer ausgegeben 313. Der Benutzer erhält somit eine unmittelbare Rückmeldung über die erfolgreiche Ausführung seiner Benutzereingabe. Der Benutzer kann, wie in dem Ausführungsbeispiel gezeigt, die Verwendung der Fahrzeugdaten vollumfassend kontrollieren.

### Bezugszeichenliste

- 100: Verfahren zum Verwalten von gesammelten Fahrzeugdaten
- 102: Empfangen von Informationen über eine gewünschte Verwendungsweise
- 104: Aktualisieren der Informationen über die zulässige Verwendung
- 200: System
- 201: Fahrzeug
- 202: Benutzerprofil
- 210: Datenbank
- 211: Fahrzeugdaten
- 212: Informationen über die zulässige Verwendung
- 213: Benutzerinformationen
- 214: Informationen über Zugriffe von Anwendungen auf die Fahrzeugdaten
- 215: erster Server
- 216: zweiter Server
- 220: Informationen über eine gewünschte Verwendungsweise
- 230-1: erste Anwendung
- 230-2: zweite Anwendung
- 230-3: dritte Anwendung
- 231-1: erster Speicher
- 231-2: zweiter Speicher
- 231-3: dritter Speicher
- 240: Verbindung
- 250: Anfrageverbindung
- 300: Ablaufdiagram
- 301: Benutzereingabe
- 302: Aktualisieren der Informationen über die zulässige Verwendung der Fahrzeugdaten
- 303: Übermitteln von Informationen über Zugriffe von Anwendungen auf die Fahrzeugdaten
- 304: Senden einer Aufforderung zur Löschung lokaler Kopien der Fahrzeugdaten
- 305: Aktualisieren der Informationen über die zulässige Verwendung der Fahrzeugdaten
- 306: Senden von Informationen über Zugriffe von Anwendungen auf die Fahrzeugdaten
- 307: Senden einer Aufforderung zur Löschung lokaler Kopien der Fahrzeugdaten
- 308: Löschen der lokalen Kopie der Fahrzeugdaten
- 309: Senden einer Bestätigung über die Löschung
- 310: Senden einer Bestätigung über die Löschung
- 311: Löschen der Fahrzeugdaten
- 312: Protokolliren der Löschung der Fahrzeugdaten
- 313: Ausgeben der Löschung der Fahrzeugdaten an den Benutzer

## Patentansprüche

1. Verfahren (100) zum Verwalten von gesammelten Fahrzeugdaten eines Fahrzeugs in einer Datenbank, wobei die Fahrzeugdaten in der Datenbank zusammen mit Informationen über eine zulässige Verwendung der Fahrzeugdaten gespeichert sind, und wobei die Datenbank einen Zugriff auf die Fahrzeugdaten nur gemäß den Informationen über die zulässige Verwendung erlaubt, umfassend:
Empfangen (102) von Informationen über eine gewünschte Verwendungsweise der Fahrzeugdaten, wobei die Informationen über die gewünschte Verwendungsweise der Fahrzeugdaten ein Verbot der weiteren Verwendung der Fahrzeugdaten anzeigen, und wobei die Fahrzeugdaten in der Datenbank zusammen mit Informationen über Zugriffe von Anwendungen auf die Fahrzeugdaten gespeichert sind;
Aktualisieren (104) der Informationen über die zulässige Verwendung der Fahrzeugdaten gemäß den Informationen über die gewünschte Verwendungsweise der Fahrzeugdaten;
Löschen der Fahrzeugdaten aus der Datenbank; und
Senden einer Aufforderung zur Löschung lokaler Kopien der Fahrzeugdaten an eine Anwendung, die gemäß den Informationen über Zugriffe von Anwendungen auf die Fahrzeugdaten auf die Fahrzeugdaten zugegriffen hat.

2. Verfahren nach Anspruch 1, wobei das Verfahren ferner ein Löschen der lokalen Kopie der Fahrzeugdaten durch die Anwendung umfasst, falls eine lokale Kopie der Fahrzeugdaten durch die Anwendung erzeugt wurde.

3. Verfahren nach Anspruch 1 oder Anspruch 2, wobei die Aufforderung zur Löschung lokaler Kopien der Fahrzeugdaten an alle Anwendungen gesendet wird, die auf die Fahrzeugdaten zugegriffen haben gemäß den Informationen über Zugriffe von Anwendungen auf die Fahrzeugdaten.

4. Verfahren nach Anspruch 2 oder Anspruch 3, wobei die Aufforderung zur Löschung lokaler Kopien der Fahrzeugdaten ferner eine Aufforderung an die Anwendung umfasst, die Aufforderung zur Löschung lokaler Kopien der Fahrzeugdaten an weitere Anwendungen weiterzuleiten, die auf die lokale Kopie zugegriffen haben.

5. Verfahren nach Anspruch 4, wobei das Verfahren ferner umfasst:
Bestimmen einer weiteren Anwendung, die auf die lokale Kopie der Fahrzeugdaten zugegriffen hat, durch die Anwendung;
Weiterleiten der Aufforderung zur Löschung lokaler Kopien der Fahrzeugdaten an die weitere Anwendung; und
falls eine weitere lokale Kopie der Fahrzeugdaten durch die weitere Anwendung erzeugt wurde, Löschen der weiteren lokalen Kopie der Fahrzeugdaten durch die weitere Anwendung.

6. Verfahren nach einem der Ansprüche 1 bis 5, wobei das Verfahren ferner ein Ausgeben einer Benachrichtigung an einen Benutzer des Fahrzeugs, dass die Fahrzeugdaten gelöscht wurden, umfasst.

7. Verfahren nach einem der vorhergehenden Ansprüche, wobei die Informationen über die gewünschte Verwendungsweise der Fahrzeugdaten auf einer Benutzereingabe eines Benutzers des Fahrzeugs basieren.

## Claims

1. A method (100) for managing collected vehicle data of a vehicle in a database, wherein the vehicle data is stored in the database together with information about a permissible use of the vehicle data, and wherein the database allows access to the vehicle data only according to the information about the permissible use, comprising:
receiving (102) information about a desired manner of use of the vehicle data, wherein the information about the desired manner of use of the vehicle data indicates a prohibition of further use of the vehicle data, and wherein the vehicle data is stored in the database together with information about accesses of applications to vehicle data;
updating (104) the information about the permissible use of the vehicle data according to the information about the desired manner of use of the vehicle data;
deleting the vehicle data from the database; and
sending a request to delete local copies of the vehicle data to an application, which according to the information about accesses of applications to the vehicle data has gained access to the vehicle data.

2. The method according to claim 1, wherein the method further comprises a deleting of the local copy of the vehicle data by the application, if a local copy of the vehicle data was generated by the application.

3. The method according to claim 1 or claim 2, wherein the request to delete local copies of the vehicle data is sent to all applications, which have gained access to the vehicle data according to the information about accesses of applications to the vehicle data.

4. The method according to claim 2 or claim 3, wherein the request to delete local copies of the vehicle data also comprises a request to the application to forward the request to delete local copies of the vehicle data to further applications, which have gained access to the local copy.

5. The method according to claim 4, wherein the method also comprises:
Determination by the application of a further application, which has gained access to the local copy of the vehicle data;
forwarding the request to delete local copies of the vehicle data to the further application; and
if a further local copy of the vehicle data was generated by the further application, deletion of the further local copy of the vehicle data by the further application.

6. The method according to any one of claims 1 to 5, wherein the method also comprises an outputting of a notification to a user of the vehicle, that the vehicle data was deleted.

7. The method according to any one of the preceding claims, wherein the information about the desired manner of use of the vehicle data is based on a user input of a user of the vehicle.

## Revendications

1. Procédé (100) de gestion de données de véhicule collectées d'un véhicule dans une base de données, les données de véhicule étant stockées dans la base de données conjointement avec des informations sur une utilisation autorisée des données de véhicule, et la base de données ne permettant un accès aux données de véhicule que selon les informations sur l'utilisation autorisée, comprenant:
la réception (102) d'informations sur un mode d'utilisation souhaité des données de véhicule, les informations sur le mode d'utilisation souhaité des données de véhicule affichant une interdiction de la poursuite de l'utilisation des données de véhicule, et les données de véhicule étant stockées dans la base de données conjointement avec des informations sur des accès d'utilisations aux données de véhicule;
l'actualisation (104) des informations sur l'utilisation autorisée des données de véhicule selon les informations sur le mode d'utilisation souhaité des données de véhicule;
l'effacement des données de véhicule dans la base de données; et
l'envoi d'une demande d'effacement de copies locales des données de véhicule à une utilisation qui a accédé aux données de véhicule selon les informations sur des accès d'utilisation aux données de véhicule.

2. Procédé selon la revendication 1, le procédé comprenant en outre un effacement de la copie locale des données de véhicule par l'utilisation si une copie locale des données de véhicule a été produite par l'utilisation.

3. Procédé selon la revendication 1 ou la revendication 2, la demande d'effacement de copies locales des données de véhicule étant envoyée à toutes les utilisations qui ont accédé aux données de véhicule selon les informations sur des accès d'utilisations aux données de véhicule.

4. Procédé selon la revendication 2 ou la revendication 3, la demande d'effacement de copies locales des données de véhicule comprenant un outre une demande faite à l'utilisation de transmettre la demande d'effacement de copies locales des données de véhicule à d'autres utilisations qui ont accédé à la copie locale.

5. Procédé selon la revendication 4, le procédé comprenant en outre:
la détermination d'une autre utilisation, qui a accédé à la copie locale des données de véhicule, par l'utilisation;
la transmission de la demande d'effacement de copies locales des données de véhicule à l'autre utilisation; et
si une autre copie locale des données de véhicule a été produite par l'autre utilisation, l'effacement de l'autre copie locale des données de véhicule par l'autre utilisation.

6. Procédé selon l'une des revendications 1 à 5, le procédé comprenant en outre une production d'un avis destiné à un utilisateur du véhicule indiquant que les données de véhicule ont été effacées.

7. Procédé selon l'une des revendications précédentes, les informations sur le mode d'utilisation souhaitée des données de véhicule se basant sur une entrée d'utilisateur d'un utilisateur du véhicule.
